# EUROPEAN PATENT APPLICATION

(11) **EP 0 638 810 A1**
(43) Date of publication of application: **15.02.1995**
(21) Application number: 94201941.5
(22) Date of filing: 06.07.1994
(51) Int. Cl.: G01P 3/486, G01D 5/249, D01D 5/34, G01D 5/34

(54) **Encoder element**

(30) Priority: 09.08.1993 BE 9300825
(71) Applicant: AGFA-GEVAERT naamloze vennootschap, B-2640 Mortsel (BE)
(72) Inventor: Costrop, Dirk, c/o Agfa-Gevaert N.V., B-2640 Mortsel (BE); Bruyndonckx, Jan, c/o Agfa-Gevaert N.V., B-2640 Mortsel (BE); Ulrix Kristof, c/o ACE, B-3500 Hasselt (BE)

(57) **Abstract**

An encoder element (1) with high spatial resolution comprising an information layer with optically readable information, wherein the information is in the form of successive pits (10) written in by a laser beam and wherein the pits possess a specific optical property that substantially differs from that of the surrounding surface of said information layer.

## Description

### Field of application of the invention

This invention relates to an encoder with high spatial resolution for positioning and/or speed determinations in rotational or linear movements (rotations or translations). More specifically, this invention relates to an encoder whereby in an encoder element binary information has been inputted that can be read by means of laser techniques.

### Background of the invention

Encoders make use of signals, mostly electric signals, that are representative for the position of a moving object. Hereby pulses are generated whose number is a measure for the distance traversed by the object, and being expressed in angular units or in distance units.
Encoders of that kind constitute an important link between the mechanics of an apparatus or a machine on the one hand and its controlling electronics on the other hand.

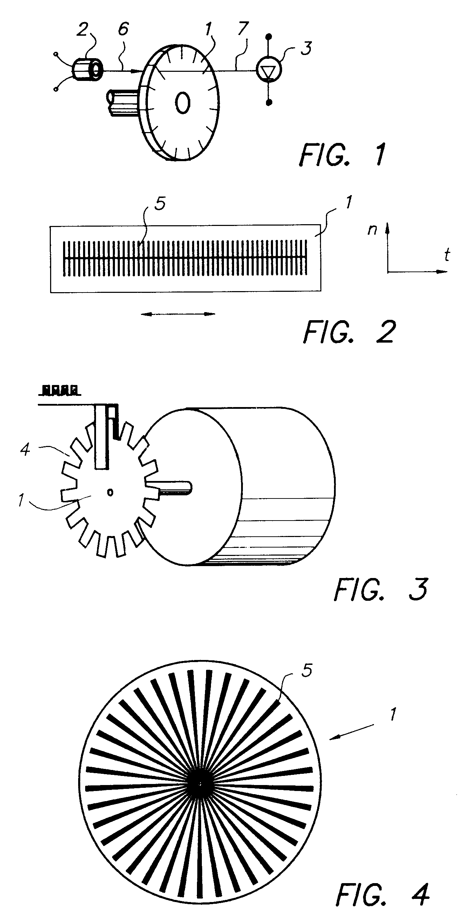

In principle such an encoder is always based on scanning a fine and regularly divided grid on a graduated element, which functions as a measuring standard and is called "encoder element" in the following. Fig. 1 is a schematic diagram of an encoder for a rotation, said encoder element 1 having a circular shape. Fig. 2 is a schematic diagram of an encoder for a translation (whose direction is symbolised by the letter t), said encoder element 1 having an elongated shape. Further, such an encoder contains a transmitter 2 such as, e.g., a light source, a receiver or recorder 3 such as, e.g., a light sensor and optionally processing electronics such as, e.g., a trigger and/or a counter (for clarity's sake not represented separately in a drawing).

A succinct overview of known encoder techniques is given, e.g., in "Die Grundlagen der Ingenieurwissenschaften", Huette, 29. Auflage, 1989, Springer Verlag (p. H23 and H24), comprising translational or linear encoders as well as rotational encoders ("Weg- und Winkel-aufnehmer"), containing conductive, inductive, magnetic as well as optical scanning, and comprising both incremental and absolute encoders.

Generally, encoders of that kind have a spatial resolution that is mainly limited by the addressability or the intrinsic resolution of the encoder element.
In resistive encoder elements, often used in analogue controlling systems, wire-wound resistors suffer from a rather low resolution, whereas non-wire-wound, potentiometric resistors in addition thereto suffer from wear at their contact surfaces and from electrical noise.
In mechanical encoder elements (see the perspective drawing in fig. 3 of a mechanically realised encoder element for rotations according to the prior art) one can enhance the number of grooves 4 or perforations in the encoder element 1 in order to enhance the spatial resolution, but this is limited by the available diameter. As the case may be, with the same object, a mechanical or electronic multiplier can be added (see in the description below).

In encoder elements produced via chemical etching, metal deposition from vapour or photographic development, it is possible in many cases to achieve higher resolutions, but yet they remain too low for high-accuracy applications. By way of illustration, fig. 4 is a schematic diagram of a chemically produced encoder element for rotations according to the prior art.

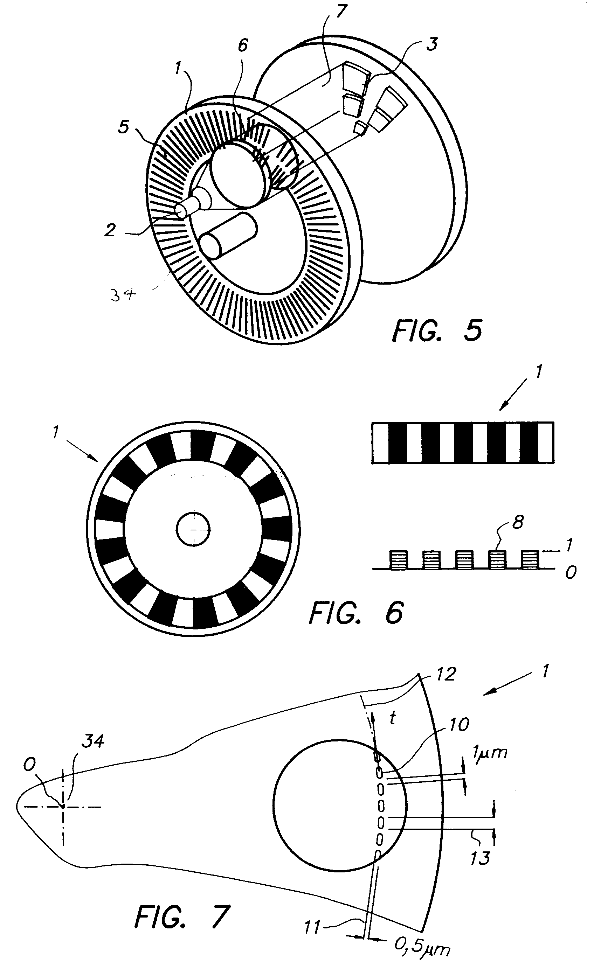

Except with resistive encoder elements, in rotations as well as in translations, the patterns (formed by grooves 4, bars or graduations 5, perforations and the like) in the encoder element 1 are mostly scanned photoelectrically as has been represented in fig. 1 and 5.

Fig. 5 illustrates the principle of optoelectronic scanning in a perspective view on a rotational encoder of the prior art. At a small distance from the graduation 5 on encoder element 1 there is at least one receiving sensor 3 irradiated by a collimated beam of light 6, either from a LED, from a miniature lamp with lens, or from a laser 2. The beam of light 7 modulated by graduation 5 strikes a photocell or a series of photocells 3, which convert the varying light into electric pulses, that are available for further processing.

Fig. 6 is a schematic diagram of two encoder elements suitable for a rotation and a translation respectively, and a corresponding pulse pattern, valid for each of said encoder elements. As represented schematically in fig. 6, the binary symbol 0, e.g., can be assigned when the encoder element transmits no light, whereas a binary 1 is being assigned when light is being transmitted indeed, thus if current passes through a photocell or if a voltage is generated indeed in a photovoltaic cell (or vice versa).

Diverse aspects of suchlike encoder elements have been described, e.g., in EP 0 332 244, and US-P 3,905,817 - 3,974,379 - 4,376,176 - 4,400,443 and 5,217,850.
Also the use of encoders, e.g. in copiers, has been described in EP 0 177 746, DO 26 40 120, GB-P 2,008,494, US-P 4,731,638 and others.

As appears from the described and cited prior art, encoders with optoelectronic scanning are known in numerous embodiments. In a very careful embodiment of suchlike encoders, in extreme situations resolutions even up to about 81,000 bits per revolution can be achieved. For as closest prior art with the highest resolution, the "Canon laser rotary encoder R 10" is known to us, which yields 81,000 pulses per revolution, which corresponds with approximately 16 arcseconds per pulse.

However, the resolution obtained according to the above-mentioned prior art appears to be insufficient for some high-accuracy applications, such as drives for rapid, high-resolution writing systems.

### Object of the invention

It is an object of the present invention to realise an encoder with high resolution. Further objects and advantages of the present invention will appear from the following detailed description.

### Summary of the invention

The object of the present invention is realised by providing an encoder element that comprises an information layer or recording layer with optically readable information, wherein the information is in the form of successive microscopic pits (also called little holes) written by a laser beam and wherein the little pits possess a specific optical property which differs substantially from that of the surrounding surface of said information layer; more specifically, the encoder element contains binary information that has been written and is readable by a source of monochromatic and coherent light, preferably by means of laser techniques.

A special feature of the present invention is that a spatial resolution as high as 1 million bits per revolution can be achieved by using laser-optical recording in the encoder element.

### Detailed description of the invention

The present invention will be described below in detail on the basis of concrete embodiments without limiting it thereto. It is possible that the man skilled in the art proposes other embodiments and applications, which, however, are based entirely on the principle of the present invention.
Fig. 1 is a schematic diagram of a prior-art encoder for a rotation;
Fig. 2 is a schematic diagram of a prior-art encoder element for a translation;
Fig. 3 is a perspective drawing of a mechanically realised encoder element of the prior art for a rotation;
Fig. 4 is schematic diagram of a chemically realised encoder element of the prior art for a rotation;
Fig. 5 is a perspective view of a prior-art rotational encoder with optoelectronic scanning;
Fig. 6 is schematic representation of two known encoder elements suited for a rotation and a translation respectively, and a corresponding pulse pattern;
Fig. 7 is a top view of an encoder element for rotations and realised according to the present invention, and containing one information track;
Fig. 8 is a sectional view through a reading head suited for reading of an encoder element according to the present invention;
Fig. 9 is a top view of an encoder element for rotations and having been realised according to the present invention, and containing one information track and one position track;
Fig. 10 is a code about the tangential position of an absolute encoder according to the present invention;
Fig. 11 is a schematic representation of an encoder element suited for a rotation, and containing three tracks;
Fig. 12 is a top view of an encoder element for rotations and having been realised according to the present invention, and comprising one information track and two boundary tracks;
Fig. 13 is a top view of an encoder element for rotations and having been realised according to the present invention, and comprising one information track, two boundary tracks, and one position track;
Fig. 14 is a top view of an encoder element for translations and having been realised according to the present invention, and comprising one information track and two boundary tracks.
Although the present invention can comprise a rotation- as well as a translation encoder, the description is especially directed to an encoder element suited for rotations.

In the following detailed description similar components, which have a same structure and a same function, for more clarity are identified with a same reference number.

Under the term "concentric curves" in the present text we understand all plane curves that - at least mathematically - can have a common centre or pole O with a same or a different radius of curvature. Such curves are mostly of the same nature, such as concentric circles or concentric spirals or concentric involutes. However, also dissimilar curves are included such as, e.g., a circle and a spiral of Archimedes, that "run concentrically", thus that have a common centre or pole O.

The object of the present invention is realised by providing an encoder element 1 which contains an information layer with optically readable information, said information having the form of successive small pits written by a monochromatic and coherent light beam, e.g. a laser beam, and said pits possessing a specific optical property that differs substantially from that of the surrounding surface of said information layer.
More specifically, the encoder element 1 contains binary information written in and readable by laser techniques with the help of a writing laser and a reading laser respectively.
Hereby an encoder with high spatial resolution can be manufactured, e.g. for the purpose of determining positions and/or speeds in rotations and translations.

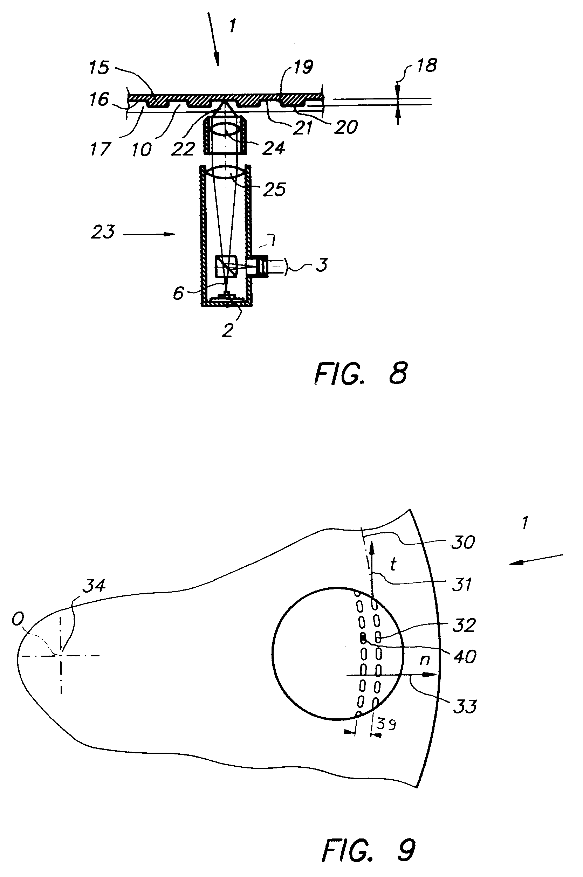

This and that will now be declared with reference to the figures 7 and 8, of which fig. 7 is a partly enlarged top view of an encoder element 1 for rotations and having been realised according to the present invention, and fig. 8 is a sectional view through a reading head 23 suited for reading an encoder element 1 according to the present invention.

The information is stored in the form of tiny pits 10, that are applied in a substrate 15, e.g. made of plastic, of the encoder element 1. The surface is provided with a reflection layer 16, e.g. made of aluminium, so that light beam 6 that scans the encoder element is reflected (see light beam 7). The reflection layer 16 is covered with a protective layer 17, e.g. an acrylic layer, as a protection against scratches and oxidation. All the pits 10 have a same width 11 in a range between 0.1 and 5 µm, but preferably 0.4 or 0.5 µm and a same depth 18, preferably equal to λ/4, wherein λ is the wavelength of a monochromatic and coherent light source 2, e.g. a laser. The pits 10 form a spiral or circular track or groove 12. The length 13 of the pits 10 amounts, e.g., to between 0.1 and 300 µm, but preferably between 0.1 and 5 µm. The pits are preferably substantially circular. The part between two successive pits and the range in the pits are called top faces 20 and bottom faces 21 respectively. Preferably, each of said faces has a length within the range of 0.1 to 5µm, so that the entire repeating interval lies between 0.2 µm and 10 µm. These intervals are either equal or equidistant, or different, such as applicable as the case may be with encoder elements possessing intentionally non-constant resolution (see further below).

The beam 6 being emitted by a semiconductor laser 2 has to pass the transparent protective layer 17 of the encoder element 1 to reach the pits 10 and is broken by said transparent layer 17.
As a result thereof the diameter 22 of the light beam decreases from the surface of the transparent layer to the recording plane. This focussing results in the fact that imperfections on the surface, such as scratches and fingerprints, remain out of focus. Hereby, the magnitude of the shadow of imperfections on the recording plane is only a fraction of the original magnitude, so that the effect thereof is minimised. While the laser beam 6 scans the encoder element 1, the reflected beam 7 leads the information from the encoder element 1 to a photodiode 3 of which the output signal is demodulated for further processing.

If a tangential interval distance of 1 µm is applied in the encoder element 1, a resolution of 1000 pulses per mm or of 0.5 arcsecond per pulse can be attained. This surprising result lies distinctly far above that of the prior art, such as US-P 4,400,443 with 4.4 pulses per mm or such as the "Canon laser rotary encoder R 10" with 16 arcseconds per pulse.
In addition thereto, said resolution can still be increased by a factor 5, if the interval distance on the encoder element 1 is reduced from 1 µm to 0.2 µm.
By applying known multiplication techniques, either mechanically or electronically (via multiplier circuits), the "intrinsic" resolution can be raised still further. For a more thorough description of such multiplications we refer to the literature concerned.

According to the present invention the information in the information layer of the encoder element 1 contains at least one information track 12 with binary information of data 8.
Herein said microscopic pits 10 can be at equidistant intervals within the information track 12 (e.g. 1 million pits uniformly distributed over the circumference of a circle or a part of a line) or at non-equidistant intervals within the information track 12 (example: first a determined zone with a pits per ° or per mm, then another zone with b pits per ° or per mm, etc). In the case of non-equidistant intervals within one and the same track 12, one can realise optional "bit profiles", e.g. a triangular or a sinusoidal course, by modulating the interval distance.

The data are then read back from the encoder element 1 by means of an optical reading head 23, that moves over the surface of element 1. The recorder has to be focussed on the information track 12, to follow said track and to read the data 8. The lens system, which contains among other things a collimator lens 25 and an objective lens 24, the laser 2 (example: a semiconductor laser with an optical output power of about 5 mW) and the recorder 3 has to be sufficiently small and light-weight to be movable rapidly and parallel to said element 1.

Although the pits 10 and the intermediate reflecting top faces 20 contain the binary information, they do not directly represent the binary 1's and 0's; this is thus another deviation from the present invention with respect to the prior art as indicated in fig. 6. The encoder element 1 is scanned, whereby the "transition" 19 of bottom face 21 to top face 20 is being recognised as a binary 1, and an unchanged structure is being read as a binary 0.
Every transition 19, no matter whether it is the beginning or the end of a pit, represents a binary 1, and all faces lying therebetween, within or outside a pit 10, have the binary value 0. In a specific embodiment of the present invention, however, only one determined transition 19 is being interpreted as a binary 1, either the descending flank (transition from a top face 20 to a bottom face 21) or the ascending flank, or vice versa (see fig. 8).

Although the spot magnitude 40 may be smaller (e.g. 0.2 µm) than the width of the pit (e.g. 0.5 µm), scanning is preferably done with a somewhat greater reading spot (e.g. 2 µm), especially in connection with the so-called tracking (see further in the description).

In a preferred embodiment said encoder element 1 can be a circular disk that is suited for rotation about an axis 34, and wherein said information track runs concentrically with said axis as well, either according to a circle, or according to a spiral, or according to some other curve, such as e.g. an involute.

Using an encoder element 1 as has been described already, one can extend so as to obtain an incremental encoder comprising at least one light source 2, one encoder element 1, and one sensor 3.

In a further embodiment of the present invention (illustrated in fig. 9) an encoder element 1 comprises at least one position track 30 with binary information concerning the tangential position 31 of (at least one zone of) the encoder element 1, and wherein said position information is included in the presence and in the absence of microscopic pits 32 at well-determined intervals within the position track. Under tangential position 31 in the present invention we understand the angular position of a rotational encoder element or the longitudinal position of a linear encoder element (cf. symbol t in figs. 2, 7, 9, 10, 11, 14).

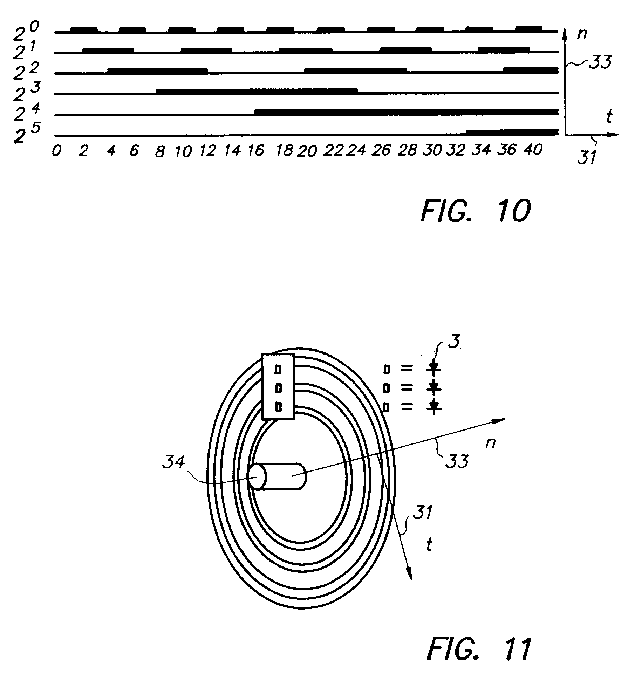

Fig. 10 illustrates one embodiment of a possible code concerning the tangential position 31 of an absolute encoder according to the present invention. Further details thereon are omitted here, since there is enough technical literature on this subject (such as the so-called BCD code, the Gray code, the Excess 3 code, etc.).

In order to be able to detect suchlike absolute codes, according to the prior art mostly three or more sensors are used, all of which follow one position track, as has been represented in fig. 11. In the case of fig. 10, with 6 position tracks, in principle even 6 sensors have to be involved.
However, such an absolute code can also be detected with but one single sensor, if this sensor scans the various position tracks at sufficiently high speed (symbolised by vₙ) or frequency, viz. at a speed or frequency of at least one order of magnitude higher than those with which the encoder element 1 moves (symbolised by vₜ). Such can be carried out in practice by reciprocating said single sensor very rapidly in a direction 33 normal to the position tracks. Symbolically one can put that vₙ >> vₜ.

As is indicated by fig. 9, said position track in a preferred embodiment of an encoder element according to the present invention lies on a circle concentric with said rotation axis 34, the track distance 39 being less than 5 µm, e.g. 1.6 µm.
In another embodiment of an encoder element according to the present invention said information track and said position track lie on a spiral concentric with said rotation axis, each of them either on a separate, but concentric spiral, or on one single common spiral.

A further embodiment of the present invention which comprises at least one light source, one encoder element, and one sensor, wherein said encoder element has an information track as well as a position track, offers the realisation of a so-called absolute encoder.

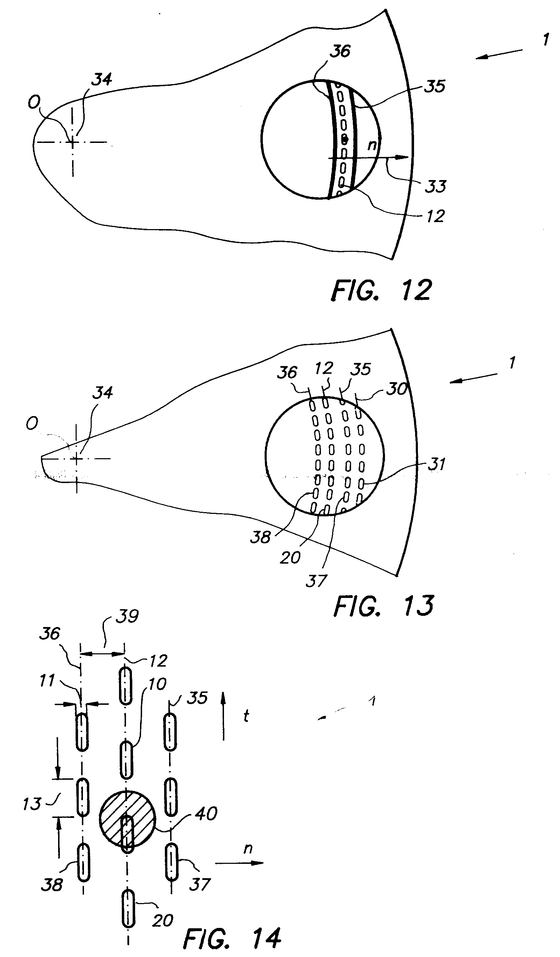

In a still further embodiment of the present invention said encoder element 1 comprises moreover at least one boundary track 35 with binary information on the normal position, sometimes also called "radial" position, of (at least one zone of) the encoder element. In a still further embodiment of the present invention fig. 12 shows near the information track 12 two more boundary tracks 35, 36 whose purpose is to put a limit to the occasional eccentricity or the occasional non-parallelism with respect to the movement. Data resulting therefrom can then be applied later in a suitable correction system.

Generally, according to the present invention, suchlike boundary tracks 35, 36 can be composed of any shape or any material or any colour that gives an optical phase shift of λ/2 between the entering laser beam 6 and the reflected laser beam 7.

In a more specific embodiment (fig. 13) the binary information in said boundary tracks 35, 36 is included in the presence and absence of microscopic pits 37, 38 with dimensions or distances equal to or differing from those of the pits in an information track or in a position track.

In principle, an incremental or absolute encoder is preferably rigidly connected, surely free from possible slip or phase shift, with a movement to be monitored or to be controlled, which is a rotation or a translation of an object.

Preferably a fixed, synchronous, mechanical ratio with a transmission ratio of 1:1 is applied, e.g. by mounting the encoder element 1 fixedly to the object to be controlled. However, the joint between said encoder and the object of which the movement to be monitored may comprise a multiplication factor, i.e. a mechanical transmission or an electronic multiplication.

Every driving system comprising driving means for moving an object and detection means for detecting the movement of said object, amongst those detection means can comprise an encoder according to any of the embodiments described above.

The present invention also offers a method for manufacturing an encoder element 1 containing at least one information track 12 with binary information included in the presence and absence of microscopic pits 10, characterised thereby that said information is written by a modulated laser beam. Said information is burnt in the writing surface in the form of microscopically small pits by means of an energetic writing laser (e.g. 15 mW), so that a continuous alternation of plane parts and pits is being generated in an information track. Scanning of the pits occurs by a less energetic writing laser (e.g. 5 mW).
The information is then being read from the encoder element by the detection of intensity changes in the reflected laser light. As has been explained above, at least one position track 30 and/or at least one boundary track 35, 36 can be applied in addition to said information track 12.

As has already been mentioned earlier, the present invention can comprise a rotation encoder as well as a translation encoder, although the description is mainly directed to a rotation. To be perfectly clear, yet a summary description follows of some dual embodiments in the case of a translation. Reference is made to fig. 14, which is a partly enlarged top view of an encoder element for translations and which has been realised according to the present invention and contains one information track and two boundary tracks.

According to the present invention said encoder element 1 can be an elongated disk that is suited for a translation and which contains at least one information track 12 parallel to said translation.

In addition, such an encoder element according to the present invention can contain at least one position track with binary information on the tangential position of (at least one zone of) the encoder element (see reference t). Herein this positional information is included in the presence and absence of microscopic pits on well-determined intervals within the position track. Preferably, said position track lies on a straight line parallel to said translation.

In an other embodiment of an encoder element according to the present invention said element can contain at least one boundary track with binary information on the normal or perpendicular position of (at least one zone of) the encoder element (see reference n). Herein the binary information in said boundary track can be included in the presence and absence of microscopic pits 37, 38.

According to the present invention, for a translation too, an incremental encoder as well as an absolute encoder can be composed, comprising at least one light source, one encoder element and one sensor, and wherein said encoder element 1 corresponds to the description hereinbefore.
Preferably, such an encoder is rigidly connected to an object of which the translation has to be monitored, the connection between said encoder and the object to be monitored optionally comprising a multiplication factor, which is a mechanical transmission or an electronic multiplication.

In the present invention an encoder element with a particularly high resolution is being described, which in addition is very cheap and which is application-oriented or can be programmed specifically for the apparatus (depending on the desired resolution) . Moreover, there is no mechanical contact with the encoder element upon scanning, so that no mechanical wear arises, and the optical system is insensitive to scratches, dust and dirt on the encoder element, which makes the invention extremely safe.

Maybe the person skilled in the art proposes other embodiments and applications which, however, are based entirely on the principle of the present invention.

As the tracks on an encoder element are spaced apart by a distance 39 of preferably 1.6 µm, accurate centering or accurate aligning of the encoder element with respect to the movement of an object to be monitored is very important. This is a sound reason to take good care of tracking by means of the laser beam. In this connection we refer among other things to EP 0 157 020 "Apparatus for accurately focussing a laser beam".

Magnitudes that can possibly be controlled during the movement of an object can be aimed at a relative position or an absolute position (both have been already mentioned), or at related magnitudes such as the speed of an object, or the synchronous running of two objects, or the length of an object, etc.

Encoder elements of that kind can be applied in photographic apparatuses (such as copiers and enlargers) and in the general construction of apparatuses, but also in drawing apparatuses, tools, transport means, robotics, etc.

## Claims

1. An encoder element (1) comprising an information layer with optically readable information, wherein the information is in the form of successive pits (10) written in by a laser beam and wherein the pits possess a specific optical property that substantially differs from that of the surrounding surface of said information layer.

2. An encoder element (1) according to claim 1, wherein the information in the information layer contains at least one information track (12) with binary information or data, and wherein said binary information is included in the presence and absence of microscopical pits (10) within the information track.

3. An encoder element (1) according to claim 2, wherein the dimensions of the microscopical pits (10) range from 0.1 to 5 µm.

4. An encoder element (1) according to claim 2 or 3, wherein said microscopical pits (10) are at equidistant intervals within the information track (12).

5. An encoder element (1) according to any of claims 2 to 4, wherein the microscopical pits (10) in the information track (12) are at equidistant intervals between 0.2 and 10 µm.

6. An encoder element (1) according to any of claims 2 to 5, wherein said element is a circular disk suited for rotation about an axis (34) and wherein said information track (12) runs concentrically to said axis.

7. An encoder element (1) according to any of claims 2 to 6, wherein said element is an elongated disk suited for a translation and contains at least one information track (12) parallel to said translation.

8. An encoder element (1) according to any of claims 2 to 7, wherein said element comprises in addition at least one position track (30) with binary information on the tangential position of the encoder element, and wherein said information is included in the presence and absence of microscopical pits (31) at well-defined intervals within the position track.

9. An encoder element (1) according to claim 8, wherein said element is a circular disk suited for rotation about an axis (34) and wherein said position track (30) lies on a circle concentric with said axis.

10. An encoder element (1) according to claim 8, wherein said element is a circular disk suited for rotation about an axis and wherein said information track (12) and said position track (30) lie on one spiral concentric with said axis.

11. An encoder element (1) according to claim 8, wherein said element is an elongated disk suited for a translation and wherein said position track lies on a straight line parallel to said translation.

12. An encoder element (1) according to any of claims 2 to 11, wherein said element comprises in addition at least one boundary track (35) with binary information on the normal position of the encoder element.

13. An encoder element (1) according to claim 12, wherein the binary information in said boundary track (35) is included in the presence and absence of microscopical pits (37).

14. An encoder element (1) according to any of claims 8 to 13, wherein the tracks (12, 30, 35, 36) are spaced apart by a distance (39) smaller than 5 µm.

15. An encoder comprising at least one light source (2), one encoder element (1) and one sensor (3), wherein said encoder element corresponds to any of claims 1 to 14.

16. An encoder according to claim 15, wherein said encoder is rigidly connected with an object whose movement, which is a rotation or a translation, is being controlled.

17. An encoder according to claim 16, wherein the connection between said encoder and the movement to be controlled contains a multiplication factor, which is a mechanical transmission or an electronic multiplication.

18. A driving system comprising driving means for the movement of an object and detection means for detecting the movement of said object, wherein said detection means comprise an encoder according to any of claims 15 to 17.
